# EUROPÄISCHE PATENTSCHRIFT

(11) **EP 1 481 830 B1**
(45) Veröffentlichungstag und Bekanntmachung des Hinweises auf die Patenterteilung: **05.11.2008**
(21) Anmeldenummer: 04011003.3
(22) Anmeldetag: 07.05.2004
(51) Int. Cl.: B60H 3/06

(54) **Belüftungsvorrichtung, insbesondere für ein Kraftfahrzeug**
Ventilation device, in particular for a motor vehicle
Dispositif de ventilation, notamment pour véhicule automobile

(30) Priorität: 27.05.2003 DE 10324320
(43) Veröffentlichungstag der Anmeldung: 01.12.2004
(73) Patentinhaber: Behr GmbH & Co. KG, 70469 Stuttgart (DE)
(72) Erfinder: Bernreuther, Oliver, 80939 München (DE); Schaake, Norman, Dr., 37075 Göttingen (DE)
(74) Vertreter: Grauel, Andreas

(56) Entgegenhaltungen:
- DE-A- 10 102 100
- DE-C- 3 706 220
- GB-A- 880 743

## Beschreibung

Die Erfindung betrifft eine Belüftungsvorrichtung, insbesondere für ein Kraftfahrzeug, gemäß dem Oberbegriff des Anspruchs 1.

Üblicherweise sind nach einem Gebläse angeordnete Luftfilter im Wesentlichen gerade ausgerichtet, um einen gleichmäßig über die gesamte Filterfläche verteilten Luftdurchsatz zu gewährleisten. Sind verschiedene Luftaustritte vorgesehen, so können auch mehrere getrennt voneinander angeordnete Luftfilter vorgesehen sein.

Aus der DE 37 06 220 C1 ist eine Belüftungsvorrichtung für Fahrzeuge mit einem Gebläse zum Erzeugen eines Luftstromes und mit einem dazu stromabwärts angeordneten Luftfilter, der zur Erhöhung des Luftdurchsatzes aus dem Luftstrom ausgeschwenkt werden kann, bekannt, wobei durch den Luftfilter zwecks Regenerierung und Reinigung ein abgezweigter Teilluftstrom geleitet werden kann, der den Luftfilter in umgekehrter Strömungsrichtung durchströmt. Hierbei nimmt der Luftfilter im Reinigungsbetrieb eine leicht abgewinktelte Stellung ein. Im normalen Anströmbetrieb ist der Filter im Wesentlichen gerade ausgerichtet.

In der DE 101 02 100 A1 ist ein Filterelement mit zick-zack-förmig ausgebildetem Filtermaterial offenbart, wobei an den Faltkanten, beispielsweise durch Scharnierleisten mit einem Filmscharnier, geringe Winkel zwischen den Filterfalten möglich sind.

Es ist Aufgabe der Erfindung, eine verbesserte Belüftungsvorrichtung zur Verfügung zu stellen.

Diese Aufgabe wird gelöst durch eine Belüftungsvorrichtung mit den Merkmalen des Anspruchs 1. Vorteilhafte Ausgestaltungen sind Gegenstand der Unteransprüche.

Erfindungsgemäß ist eine Belüftungsvorrichtung, insbesondere für ein Kraftfahrzeug, vorgesehen, bei der der Luftfilter durch zwei Schenkel gebildet ist, welche in einem Winkel von max. 90° zueinander angeordnet sind, d.h. insbesondere einen rechten oder spitzen Winkel bilden. Die beiden Schenkel sind asymmetrisch bezüglich ihrer Länge ausgebildet.

Dabei beträgt die Länge des längeren Schenkels ein ganzzahliges Vielfaches, vorzugsweise zwei oder drei, der Länge des kürzeren Schenkels. Dadurch, dass der lange Schenkel ein ganzzahliges Vielfaches des kurzen Schenkels ist, ergeben sich fertigungstechnische Vorteile, insbesondere fällt bei der Produktion der Luftfilter wenig Abfall an.

Das Luftfilter ist bevorzugt zweiteilig ausgebildet. Durch eine derartige Anordnung ergibt sich bei geringem Bauraumbedarf eine große Filterfläche, die auch bei unterschiedlichen Anströmungsrichtungen eine gute und gleichmäßige Beaufschlagung mit Luft gewährleistet.

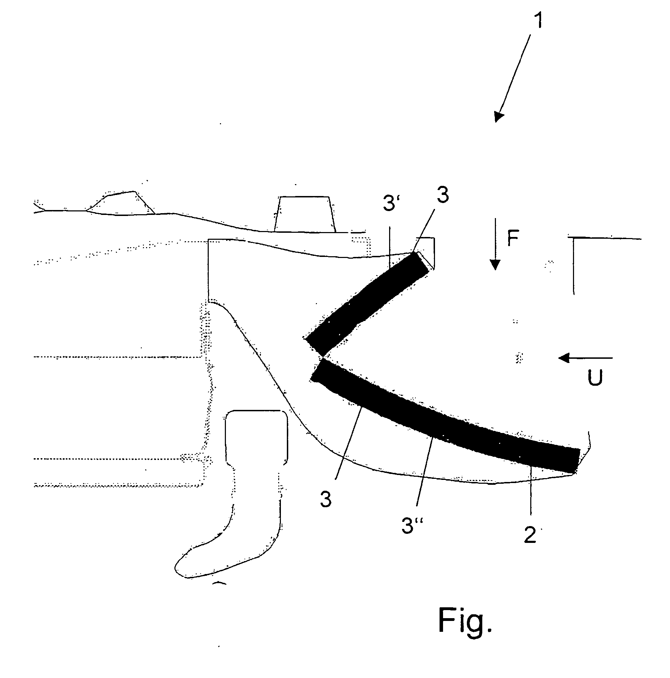

Im Folgenden wird die Erfindung anhand eines Ausführungsbeispiels unter Bezugnahme auf die Zeichnung im Einzelnen erläutert. In der Zeichnung zeigt die einzige Figur einen Schnitt durch den Einlassbereich einer Belüftungsvorrichtung 1 einer Kraftfahrzeug-Klimaanlage mit einem Luftfilter 2. Hierbei kann Luft von außerhalb des Fahrzeuges oder vom Fahrzeuginnenraum mittels eines nicht dargestellten Gebläses angesaugt werden. Die angesaugte Luft wird durch das Luftfilter 2 geleitet und anschließend auf bekannte Weise temperiert und dem Fahrzeuginnenraum zugeführt.

Das Luftfilter 2 ist zweiteilig ausgestaltet, wobei die beiden Schenkel 3 asymmetrisch ausgebildet sind. Hierbei ist der kurze Schenkel 3' halb so lang wie der lange Schenkel 3". Die beiden Schenkel 3 sind gemäß dem ersten Ausführungsbeispiel in einem spitzen Winkel angeordnet, wobei der lange Schenkel 3" etwa senkrecht zur Frischluft-Zufuhrrichtung, in der Figur durch den Pfeil F angedeutet, und der kurze Schenkel 3' etwa senkrecht zur Umluft-Zufuhrrichtung, in der Figur durch den Pfeil U angedeutet, angeordnet ist. Die beiden Schenkel 3 können in Luftströmungsrichtung leicht durchgebogen sein, um eine bessere Raumnutzung oder eine verbesserte Anströmung zu erreichen.

## Patentansprüche

1. Belüftungsvorrichtung, insbesondere für ein Kraftfahrzeug, mit einem Luftfilter (2), der durch zwei Schenkel (3) gebildet ist, welche in einem Winkel von max. 90° zueinander angeordnet sind, **dadurch gekennzeichnet, dass** die beiden Schenkel (3) asymmetrisch bezüglich ihrer Länge ausgebildet sind und die Länge des längeren Schenkels (3") ein ganzzahliges Vielfaches der Länge des kurzen Schenkels (3') ist.

2. Belüftungsvorrichtung nach Anspruch 1, **dadurch gekennzeichnet, dass** der lange Schenkel (3") zwei- oder dreimal so lang wie der kurze Schenkel (3') ist.

3. Belüftungsvorrichtung nach Anspruch 1 oder 2, **dadurch gekennzeichnet, dass** die Breite der Schenkel (3) gleich ist.

4. Belüftungsvorrichtung nach einem der vorhergehenden Ansprüche, **dadurch gekennzeichnet, dass** die Schenkel (3) mittig leicht in Luftströmungsrichtung gebogen sind.

5. Belüftungsvorrichtung nach einem der vorhergehenden Ansprüche, **dadurch gekennzeichnet, dass** der Luftfilter (2) zweiteilig ausgebildet ist.

## Claims

1. Ventilation device, in particular for a motor vehicle, with an air filter (2) represented by two legs (3) arranged at a maximum angle of 90° relative to one another, **characterised in that** the two legs (3) are designed asymmetrically in terms of their length and the length of the longer leg (3") is an integral multiple of the length of the short leg (3').

2. Ventilation device according to claim 1, **characterised in that** the long leg (3") is twice or three times as long as the short leg (3').

3. Ventilation device according to claim 1 or 2, **characterised in that** the width of the legs (3) is identical.

4. Ventilation device according to any of the preceding claims, **characterised in that** the legs (3) are slightly bent in the airflow direction in the middle.

5. Ventilation device according to any of the preceding claims, **characterised in that** the air filter (2) is made of two parts.

## Revendications

1. Dispositif de ventilation, en particulier pour un véhicule automobile, comprenant un filtre à air (2) qui est formé par deux branches (3) qui sont disposées, l'une par rapport à l'autre, suivant un angle de 90° maximum, **caractérisé en ce que** les deux branches (3) sont configurées de façon asymétrique par rapport à leur longueur, et la longueur de la branche (3") la plus longue est un multiple entier de la longueur de la branche courte (3').

2. Dispositif de ventilation selon la revendication 1, **caractérisé en ce que** la branche longue (3") est deux ou trois fois plus longue que la branche courte (3').

3. Dispositif de ventilation selon la revendication 1 ou 2, **caractérisé en ce que** la largeur des branches (3) est identique.

4. Dispositif de ventilation selon l'une quelconque des revendications précédentes, **caractérisé en ce que** les branches (3) sont au milieu légèrement incurvées, dans la direction d'écoulement de l'air.

5. Dispositif de ventilation selon l'une quelconque des revendications précédentes, **caractérisé en ce que** le filtre à air (2) est configuré en deux parties.
